# EUROPEAN PATENT SPECIFICATION

(11) **EP 2 797 466 B1**
(45) Date of publication and mention of the grant of the patent: **16.09.2015**
(21) Application number: 12790517.2
(22) Date of filing: 15.11.2012
(51) Int. Cl.: A47J 31/057, A47J 31/44

(54) **A HOT BEVERAGE PREPARATION MACHINE**
MASCHINE ZUR ZUBEREITUNG HEISSER GETRÄNKE
MACHINE DE PRÉPARATION DE BOISSON CHAUDE

(30) Priority: 26.12.2011 TR 201112952
(43) Date of publication of application: 05.11.2014
(73) Proprietor: Arçelik Anonim Sirketi, 34950 Istanbul (TR)
(72) Inventor: COBAN, Omer Burak, Tuzla, 34950 Istanbul (TR); DAVASLIGIL, Sena, Tuzla, 34950 Istanbul (TR); GERZELI, Ismail, Tuzla, 34950 Istanbul (TR); VATANSEVER, Celal, Tuzla, 34950 Istanbul (TR); HASANREISOGLU, Ali Levent, Tuzla, 34950 Istanbul (TR)
(86) International application number: PCT/EP2012/072680
(87) International publication number: WO 2013/097977

(56) References cited:
- EP-A1- 2 005 865
- EP-A1- 2 484 251
- EP-A2- 2 103 234
- DE-U- 7 120 428

## Description

The present invention relates to a hot beverage preparation machine comprising a control unit.

In hot beverage preparation machines, the water filled into the water container is heated by a water heater and is transferred to the brewing chamber containing raw material of the beverage to be prepared. The brewing process is performed in the brewing chamber as the result of the interaction of the beverage raw material and water. The brewed beverage is transferred into a pot afterwards and served.

In the state of the art hot beverage making machine explained in the German Patent Application No. DE29794923, the brewing chamber and the pot are positioned to be one above the other and the water container is side by side with the brewing chamber and the pot. A platform is located on the body, next to the water container. A water heating recipient is placed onto the platform.

In the hot beverage making machine explained in another state of the art embodiment, International Patent Application No. WO2004008922, the brewing chamber and the pot are positioned to be one above the other and the water container is side by side with the brewing chamber and the pot. In the embodiment explained in this document, the water container can be separated from the machine and used for serving.

The EP 2 005 865 A1 discloses a coffee or tea maker that includes a base, an operation cup, and a thermal carafe. A container support is located on the base and a container with a heater is located on the container support. The coffee or tea maker automatically heats the water in the container, supplies the water into the operation cup to make coffee or tea and stores the coffee or tea in the thermal carafe.

The aim of the present invention is the realization of a hot beverage preparation machine that provides efficient use and serving opportunity. In the hot beverage preparation machine realized in order to attain the aim of the present invention and explicated in the claims, at one side of the body, the brewing chamber is disposed at the upper side and the pot below and the water container is disposed on a platform at the other side of the body. The water in the water container is heated by means of a water heater. A connector is disposed on the platform providing the water heater to be energized when the water container is placed on the platform. The water heated in the water container is transferred into the brewing chamber by means of a transfer mechanism.

The water container of the hot beverage preparation machine of the present invention has an opening enabling the water container to be filled from above. The base of the pot is shaped so as to be placed into the opening. Thus, when placed onto the water container, the pot seats into the water container. Thus, the pot can be kept hot on the water container with the heat of the water inside the water container, and thus it is facilitated to carry the pot and the water container together for serving to another place.

In an embodiment of the present invention, the hot beverage preparation machine comprises two pots. Thus, when more than one beverage is desired to be prepared, the first pot can be kept on the water container after the beverage is prepared, and at this moment the second beverage can be prepared by placing the second pot into the housing under the brewing chamber.

In an embodiment of the present invention, the opening is closed by means of a lid that does not prevent heat transfer. Thus, the water that boils and vaporizes in the water container is provided to be condensed.

In a version of this embodiment, holes are arranged on the lid. Thus, the water vapor is provided to contact the base of the pot by passing through the holes.

In an embodiment of the present invention, a rib-shaped support is disposed all around the side of the lid. When the pot is placed onto the water container, the support surrounds the base of the pot from sides and provides the pot to be kept on the water container during serving.

In an embodiment of the present invention, the brewing chamber and the pot are positioned on the body one above the other, and the platform is placed next to the brewing chamber and the pot. Thus, the water container is kept side by side with the brewing chamber and the pot.

In an embodiment of the present invention, the water container can be carried easily by means of the handle disposed thereon. In this embodiment, the water container furthermore comprises an orifice arranged at the upper side, enabling to easily pour out the water within when the water container is tilted during serving. Thus, when the user desires to take the water container from the platform to use in serving water, it is possible to hold from the handle and pour the water flowing out from the orifice into cups, different containers etc by tilting the water container.

In an embodiment of the present invention, the pot is heated by a pot heater disposed on the body, at the base of the housing. Thus, the beverage transferred from the brewing chamber into the pot is prevented from getting cold.

In the hot beverage preparation machine of the present invention, it is possible to keep more than one beverage hot at the same time and to easily carry the pot and the water container together to the place of the serving.

The hot beverage preparation machine realized in order to attain the aim of the present invention is illustrated in the attached figures, where:

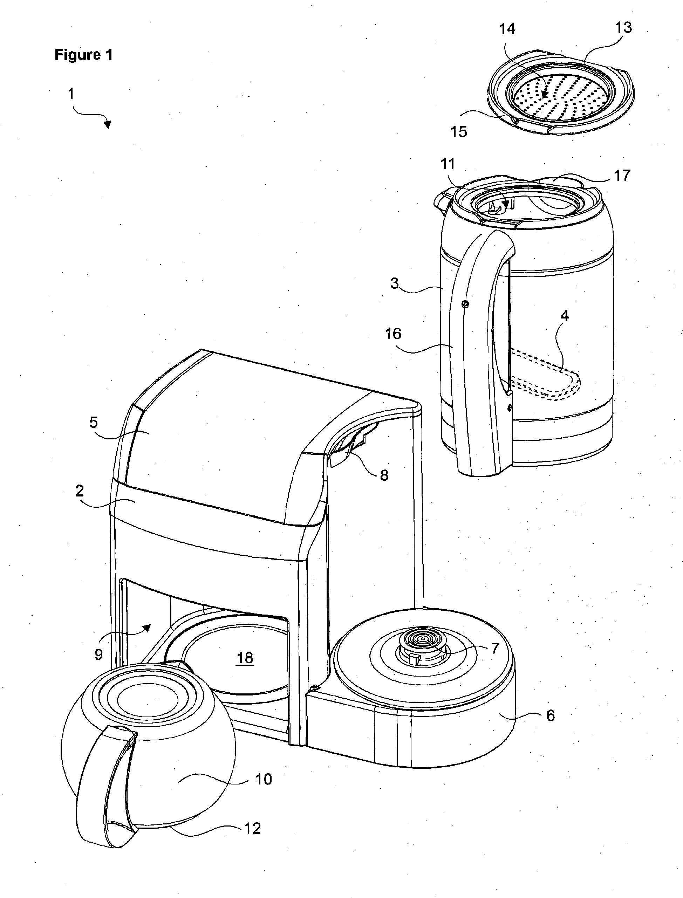

Figure 1 - is the exploded perspective view of a hot beverage preparation machine.

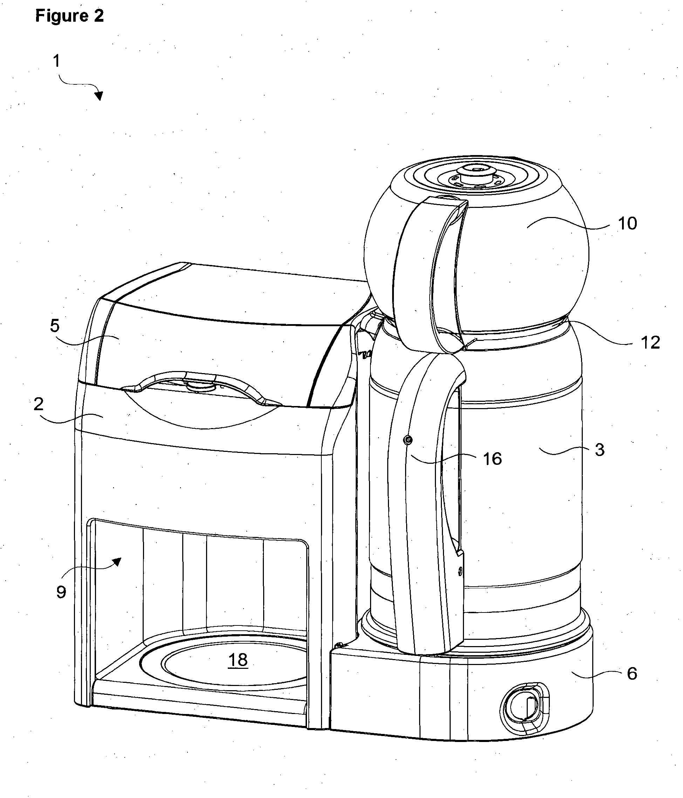

Figure 2 - is the perspective view of the hot beverage preparation machine when the pot is on the water container in an embodiment of the present invention.

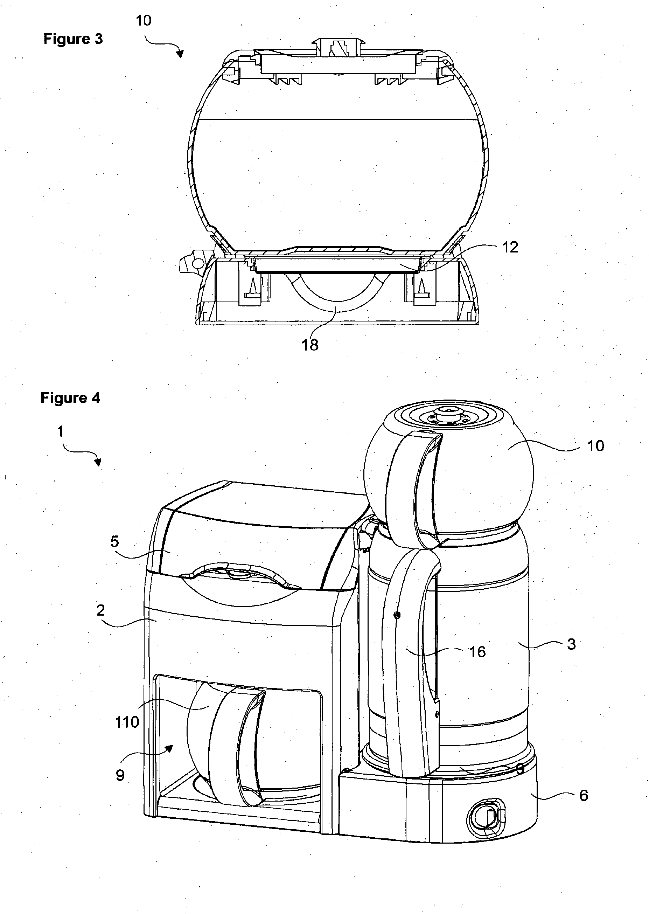

Figure 3 - is the sideways view of the pot in an embodiment of the present invention.
Figure 4 - is the perspective view of the hot beverage preparation machine in another embodiment of the present invention.

The elements illustrated in the figures are numbered as follows:
1. Hot beverage preparation machine
2. Body
3. Water container
4. Water heater
5. Brewing chamber
6. Platform
7. Connector
8. Transfer mechanism
9. Housing
10. 110. Pot
11. Opening
12. Base
13. Lid
14. Hole
15. Support
16. Handle
17. Orifice
18. Pot heater

The hot beverage preparation machine (1) comprises:
- a body (2),
- a water container (3) wherein water is filled,
- a water heater (4) that provides the water in the water container (3) to be heated,
- a brewing chamber (5) wherein the raw material of the beverage to be prepared is put and whereto the water heated in the water container (3) is transferred, wherein the brewing process is performed as the result of the interaction of the beverage raw material and water,
- a platform (6) whereon the water container (3) is placed, enabling the water container (3) to be separated from the body (2) to be used for serving purposes,
- a connector (7) disposed on the platform (6), enabling energy transfer to the water container (3) for heating the water inside the water container (3) and
- a transfer mechanism (8) providing the water heated in the water container (3) to be transferred to the brewing chamber (5) while the water container (3) is on the platform (6).

The hot beverage preparation machine (1) of the present invention furthermore comprises a housing (9) located on the body (2), under the brewing chamber (5), an opening (11) arranged on the upper surface of the water container (3), enabling the water container (3) to be filled with water and a pot (10) with its upper surface being partially open, that can be placed into the housing (9), that has a base (12) having a form matching with the opening (11) so as to bear against the sides of the opening (11) by seating onto the opening (11) when placed onto the water container (3), and wherein the beverage brewed in the brewing chamber (5) is transferred when placed into the housing (9). Thus, when the water container (3) and the pot (10) are removed from the body (2) for the serving of the beverage prepared in the hot beverage preparation machine (1) and taken to the place where the serving will be performed, it is possible to keep the pot (10) on the water container (3).

In the hot beverage preparation machine (1) of the present invention, when hot beverage is desired to be prepared, water is filled into the water container (3) and placed on the platform (6) to be seated on the connector (7). The water in the water container (3) is provided to be heated by operating the water heater (4) with the energy transferred from the connector (7). The heated water is transferred into the brewing chamber (5) by means of the transfer mechanism (8). After the brewing process is completed in the brewing chamber (5), the beverage is ready to serve by being transferred into the pot (10) disposed under the brewing chamber (5). When the beverage is to be served, the pot (10) is taken from inside the housing (9) and taken to the place of serving. In the case the beverage is desired to be served by diluting, it is possible to take the pot (10) together with the water container (3) from the platform (6) and carry to the place of serving. With the form of its base (12) being compatible with the opening (11), after the beverage is prepared, the pot (10) can be placed onto the water container (3) during the waiting time before serving or during the carrying for the serving.

In an embodiment of the present invention, the hot beverage preparation machine (1) comprises two pots (10, 110). In the hot beverage preparation machine (1), a first beverage is prepared in the first pot (10) and a second beverage in the second pot (110) respectively. By means of the bases (12) of the pots (10, 110) being compatible with the opening (11), the first beverage in the first pot (10) can be kept hot on the water container (3) during the preparation of the second beverage. Thus, in crowded places where various beverages are desired to be consumed or the capacity of the pot (10) is not sufficient to meet the consumption rate, the hot beverage preparation machine (1) can be effectively used.

In an embodiment of the present invention, the water container (3) comprises a lid (13) covering the opening (11) so as to allow heat transfer. Thus, while the water vapor generating with the water boiling in the water container (3) being vaporized, can be condensed, the pot (10) is provided to be kept hot when the pot (10) is placed onto the water container (3).

In a version of this embodiment, the water container (3) comprises more than one hole (14) arranged on the lid (13), enabling the passage of the vapor. Thus, the water vapor generating with the water boiling in the water container (3) being vaporized is provided to contact the base (12).

In an embodiment of the present invention, the water container (3) comprises a support (15) that extends upwards from the sides of the lid (13) and that grasps the base (12) from sides when the pot (10) is placed onto the water container (3). Thus, when the pot (10) is desired to be taken to another place for serving by being placed onto the water container (3), the pot (10) is provided to be held in a balanced manner.

In an embodiment of the present invention, the platform (6) is positioned so as to be next to the brewing chamber (5) and the pot (10) that are positioned one above the other on the body (2). Thus, the water container (3) placed onto the platform (6) is provided to be kept side by side with the brewing chamber (5) and the pot (10).

The water container (3) comprises a handle (16) enabling it to be grabbed by the user for lifting from the platform (6) and an orifice (17) enabling water to be poured out when desired to be used separately for the aim of serving by taking off from the platform (6). Consequently, the water container (3) both provides water to be heated and transferred to the brewing chamber (5) but can also be used for serving by being taken off the platform (6).

In an embodiment of the present invention, the hot beverage preparation machine (1) comprises a pot heater (18) providing the beverage in the pot (10) to be kept hot. Accordingly, the beverage is provided to be kept hot as long as it stays in the pot (10) prior to serving.

By means of the present invention, a hot beverage preparation machine (1) that provides efficient use and serving opportunity is realized.

It is to be understood that the present invention is not limited to the embodiments disclosed above and a person skilled in the art can easily introduce different embodiments. These should be considered within the scope of the protection postulated by the claims of the present invention.

## Claims

1. A hot beverage preparation machine (1) comprising
- a body (2),
- a water container (3) wherein water is filled,
- a water heater (4) that provides the water in the water container (3) to be heated,
- a brewing chamber (5) wherein the raw material of the beverage to be prepared is put and whereto the water heated in the water container (3) is transferred, wherein the brewing process is performed as the result of the interaction of the beverage raw material and water,
- a platform (6) whereon the water container (3) is placed, enabling the water container (3) to be separated from the body (2) to be used for serving purposes,
- a connector (7) disposed on the platform (6), enabling energy transfer to the water container (3) for heating the water inside the water container (3) and
- a transfer mechanism (8) providing the water heated in the water container (3) to be transferred to the brewing chamber (5) while the water container (3) is on the platform (6),
- a housing (9) situated on the body (2), under the brewing chamber (5),
- an opening (11) arranged on the upper surface of the water container (3), enabling the water container (3) to be filled with water and
- a pot (10) with its upper surface being partially open, that can be placed into the housing (9),
**characterized in that**
the pot (10) has a base (12) having a form matching with the opening (11) so as to bear against the sides of the opening (11) by seating onto the opening (11) when placed onto the water container (3), and wherein the beverage brewed in the brewing chamber (5) is transferred when placed into the housing (9).

2. A hot beverage preparation machine (1) as in Claim 1, **characterized by** comprising two such pots (10,110).

3. A hot beverage preparation machine (1) as in Claim 1 or 2, **characterized by** a lid (13) closing the opening (11) so as to allow heat transfer.

4. A hot beverage preparation machine (1) as in Claim 3, **characterized by** more than one hole (14) arranged on the lid (13), enabling passage of the vapor.

5. A hot beverage preparation machine (1) as in Claim 3 or 4, **characterized by** a support (15) that extends upwards from the sides of the lid (13) and that grasps the base (12) from sides when the pot (10) is placed onto the water container (3).

6. A hot beverage preparation machine (1) as in any one of the above claims, **characterized by** the brewing chamber (5) and the housing (9) that are positioned one above the other on the body (2) and the platform (6) positioned so as to be next to the pot (10).

7. A hot beverage preparation machine (1) as in any one of the above Claims, **characterized by** the water container (3) having a handle (16) enabling it to be grabbed by the user for lifting from the platform (6) and an orifice (17) enabling water to be poured out when desired to be used separately for the aim of serving by taking off from the platform (6).

8. A hot beverage preparation machine (1) as in any one of the above Claims, **characterized by** a pot heater (18) providing the beverage in the pot (10) to be kept hot.

## Patentansprüche

1. Heißgetränkzubereitungsmaschine (1), umfassend
- einen Gehäusekörper (2),
- einen Wasserbehälter (3), in den Wasser gefüllt ist,
- eine Wasserheizeinrichtung (4), die dafür sorgt, dass der Wasserbehälter (3) erwärmt wird,
- eine Brühkammer (5), in die Rohmaterial für das zuzubereitende Getränk gegeben wird und in die das im Wasserbehälter (3) erwärmte Wasser übertragen wird, wobei der Brühprozess als Ergebnis der Interaktion des Getränkerohmaterials und von Wasser durchgeführt wird,
- eine Plattform (6), auf der der Wasserbehälter (3) angeordnet ist, so dass der Wasserbehälter (3) vom Gehäusekörper (2) getrennt werden kann, um zu Servierzwecken verwendet zu werden,
- einen Steckverbinder (7), der an der Plattform (6) angeordnet ist und eine Energieübertragung an den Wasserbehälter (3) zum Erwärmen des Wasser im Wasserbehälter (3) zu ermöglichen, und
- einen Übertragungsmechanismus (8), der dafür sorgt, dass das im Wasserbehälter (3) erwärmte Wasser an die Brühkammer (5) übertragen wird, während der Wasserbehälter (3) auf der Plattform (6) ist,
- ein Gehäuse (9), das am Gehäusekörper (2) unter der Brühkammer (5) angeordnet ist,
- eine Öffnung (11), die an der Oberfläche des Wasserbehälters (3) angeordnet ist und es ermöglicht, den Wasserbehälter (3) mit Wasser zu füllen, und
- einen Topf (10), dessen Oberfläche teilweise offen ist und der in das Gehäuse (9) gesetzt werden kann,
**dadurch gekennzeichnet, dass**
der Topf (10) eine Basis (12) mit einer Form aufweist, die mit der Öffnung (11) übereinstimmt, um an den Seiten der Öffnung (11) anzuliegen, indem er auf der Öffnung (11) sitzt, wenn er auf den Wasserbehälter (3) gesetzt wird, und in den das Getränk, das in der Brühkammer (5) gebrüht wird, übertragen wird, wenn er in das Gehäuse (9) gesetzt wird.

2. Heißgetränkzubereitungsmaschine (1) nach Anspruch 1, **dadurch gekennzeichnet, dass** sie zwei derartige Töpfe (10, 110) umfasst.

3. Heißgetränkzubereitungsmaschine (1) nach Anspruch 1 oder 2, **gekennzeichnet durch** einen Deckel (13), der die Öffnung (11) schließt, um Wärmeübertragung zuzulassen.

4. Heißgetränkzubereitungsmaschine (1) nach Anspruch 3, **gekennzeichnet durch** mehrere Löcher (14), die am Deckel (13) angeordnet sind und das Durchlassen des Dampfes ermöglichen.

5. Heißgetränkzubereitungsmaschine (1) nach Anspruch 3 oder 4, **gekennzeichnet durch** einen Träger (15), der sich von den Seiten des Deckels (13) nach oben erstreckt und die Basis (12) von den Seiten ergreift, wenn der Topf (10) auf den Wasserbehälter (3) gesetzt wird.

6. Heißgetränkzubereitungsmaschine (1) nach einem der vorangehenden Ansprüche, **dadurch gekennzeichnet, dass** die Brühkammer (5) und das Gehäuse (9) am Gehäusekörper (2) übereinander angeordnet sind und die Plattform (6) derart angeordnet ist, dass sie neben dem Topf (10) ist.

7. Heißgetränkzubereitungsmaschine (1) nach einem der vorangehenden Ansprüche, **dadurch gekennzeichnet, dass** der Wasserbehälter (3) einen Griff (16), der es dem Benutzer ermöglicht, ihn zu ergreifen, um ihn von der Plattform (6) abzuheben, und eine Mündung (17) aufweist, die es ermöglicht, das Wasser auszugießen, wenn es gesondert zum Zweck des Servierens benutzt werden soll, indem es von der Plattform (6) genommen wird.

8. Heißgetränkzubereitungsmaschine (1) nach einem der vorangehenden Ansprüche, **gekennzeichnet durch** eine Topfheizeinrichtung (18), die dafür sorgt, dass das Getränk im Topf (10) warm gehalten wird.

## Revendications

1. Une machine de préparation de boissons chaudes (1) comprenant;
- un corps (2),
- un réservoir d'eau (3) dans lequel l'eau est remplie,
- un dispositif de chauffage d'eau (4) qui permet le chauffage de l'eau dans le réservoir d'eau (3),
- une chambre de préparation (5) dans laquelle la matière première de la boisson à préparer est placée et vers laquelle l'eau chauffée dans le réservoir d'eau (3) est transférée et dans laquelle le processus de préparation est réalisé en raison de l'interaction entre l'eau et la matière première de la boisson,
- une plate-forme (6) sur laquelle le réservoir d'eau (3) est placé, que permet au réservoir d'eau (3) d'être séparé du corps (2) à être utilisé pour servir,
- un connecteur (7) qui est disposé sur la plate-forme (6) et qui permet le transfert de l'énergie au réservoir d'eau (3) pour le chauffage de l'eau dans le réservoir d'eau (3) et
- un mécanisme de transfert (8) qui permet le transfert de l'eau chauffée dans le réservoir d'eau (3) à la chambre de préparation (5) tandis que le réservoir d'eau (3) est sur la plate-forme (6),
- un logement (9) qui est situé sur le corps (2) sous la chambre de préparation (5)
- une ouverture (11) qui est arrangée sur la surface supérieure du réservoir d'eau (3) et qui permet le remplissage du réservoir d'eau (3) avec l'eau et
- un pot (10) dont la surface supérieure est partiellement ouverte, qui est placé dans le logement (9),
**caractérisée en ce que**
le pot (10) présente une base (12) avec une forme correspondant à l'ouverture (11) de manière à s'appuyer sur les côtés de l'ouverture (11) en étant assise sur l'ouverture (11) lorsqu'il est placé sur le réservoir d'eau (3) et où la boisson préparée dans la chambre de préparation (5) est transférée lorsqu'il est placé dans le logement (9).

2. Une machine de préparation de boissons chaudes (1) selon la Revendication 1, **caractérisée en ce qu'**elle comprend deux pots (10, 110).

3. Une machine de préparation de boissons chaudes (1) selon la Revendication 1 ou 2, **caractérisée par** un couvercle (13) qui ferme l'ouverture (11) de manière à permettre le transfert de chaleur.

4. Une machine de préparation de boissons chaudes (1) selon la Revendication 3, **caractérisée par** plus d'un trou (14) qui est arrangé sur le couvercle (13) et qui permet le passage de la vapeur.

5. Une machine de préparation de boissons chaudes (1) selon la Revendication 3 ou 4, **caractérisée par** un support (15) qui s'étend vers le haut à partir des côtés du couvercle (13) et qui saisit la base (12) à partir des côtés lorsque le pot (10) est placé sur le réservoir d'eau (3).

6. Une machine de préparation de boissons chaudes (1) selon l'une quelconque des revendications précédentes, **caractérisée par** la chambre de préparation (5) et le logement (9) qui sont positionnés l'un sur l'autre sur le corps (2) et la plate-forme (6) positionnée de manière à être à côté du pot (10).

7. Une machine de préparation de boissons chaudes (1) selon l'une quelconque des revendications précédentes, **caractérisée par** le réservoir d'eau (3) qui présente une poignée (16) qui lui permet d'être saisi par l'utilisateur pour soulever à partir de la plate-forme (6) et un orifice (17) qui permet à l'eau d'être versée lorsque l'on veux l'utiliser séparément pour le but de servir en l'enlevant à partir de la plate-forme (6).

8. Une machine de préparation de boissons chaudes (1) selon l'une quelconque des revendications précédentes, **caractérisée par** un dispositif de chauffage de pot (18) qui assure que la boisson dans le pot (10) est maintenue chaude.
